# EUROPEAN PATENT APPLICATION

(11) **EP 1 992 222 A1**
(43) Date of publication of application: **19.11.2008**
(21) Application number: 08008988.1
(22) Date of filing: 15.05.2008
(51) Int. Cl.: A01K 7/00

(54) **A drinking trough assembly**

(30) Priority: 16.05.2007 GB 0709414
(71) Applicant: J Wilson Agricultural Ltd, Coleraine, County (London)Derry BT51 4ED (GB)
(72) Inventor: Campbell, Bob, County Antrim, BT36 7LS (IE)
(74) Representative: Waller, Stephen

(57) **Abstract**

A drinking trough assembly (10) comprising a trough (12), and at least one coupling device (36) for coupling the trough (12) to a support (14,16), wherein said at least one coupling device (36) is removably connectable to the trough (12). Preferably said at least one coupling device (36) is removably connectable to the trough (12) adjacent the mouth of the trough (12). Removal of the coupling device (36) from the trough (12) permits the trough to be stacked in nesting relationship with other identical troughs.

## Description

The present invention relates to animal drinking troughs.

It is known to pivotally mount a drinking trough between two support stands. Conventionally, either end of the trough is provided with a respective pivot bar or shaft which slots into a respective stand to allow pivoting movement of the trough. Normally, the pivot bars are fixed to the ends of the trough by, for example, welding.

One problem with this arrangement is that the pivot bars are subject to wear and rust but cannot be replaced without replacing the entire trough. Another problem with the conventional arrangement is that the troughs do not lend themselves to space-efficient transport and storage.

It would be desirable to provide a trough assembly which overcomes these problems.

Accordingly, the invention provides a drinking trough assembly comprising a trough, and at least one coupling device for coupling the trough to a support, wherein said at least one coupling device is removably connectable to the trough. Advantageously, said at least one coupling device is removably connectable to the trough adjacent the mouth of the trough, preferably to a lip located at or adjacent the mouth.

In preferred embodiments, said at least one coupling device is connectable to an end or side of the trough which is tapered, or obliquely disposed, with respect to the mouth of the trough, said at least one coupling device being suspended in use from said lip or mouth to define a gap between said at least one coupling device and said tapered end or side. Typically, said at least one coupling device has a body, for example in the form of a plate, which is substantially perpendicularly disposed to the mouth of the trough.

Said at least one coupling device typically includes a bar or shaft for coupling with a support stand or other support, the bar or shaft usually projecting substantially perpendicularly from the body of the coupling device.

In preferred embodiments, the trough is substantially rectangular in plan cross-section, with both ends and typically also both sides being tapered. A respective coupling device is usually provided at each end. It will be understood, however, that the invention may be used with troughs of other shapes.

According to a further aspect of the present invention there is provided a drinking trough assembly comprising a trough adapted to be stackable in nested relationship with one or more identical troughs, and a support structure being removably connectable to the drinking trough adjacent the mouth of the trough, whereby, when connected to the drinking trough, said support structure is adapted to support the drinking trough on a surface, said supporting structure being removable from the drinking trough to permit the trough to be stacked with one or more identical troughs.

Further advantageous aspects of the invention will be apparent to those ordinarily skilled in the art upon review of the following description of a specific embodiment and with reference to the accompanying drawings.

An embodiment of the invention is now described by way of example and with reference to the accompanying drawings in which:
Figure 1 shows a perspective view of a drinking trough assembly embodying the invention, the trough being shown in a first mode of use;
Figure 2 shows a perspective view of the drinking trough assembly of Figure 1, shown in a second mode of use;
Figure 2a shows a reverse angle of part of the assembly of Figure 2;
Figure 3 shows three troughs, suitable for use in drinking trough assemblies embodying the invention, shown stacked one within the other;
Figure 4 shows an exploded view of part of the drinking trough assembly of Figure 1;
Figure 5 shows a sectional side view of part of the trough assembly of Figure 1; and

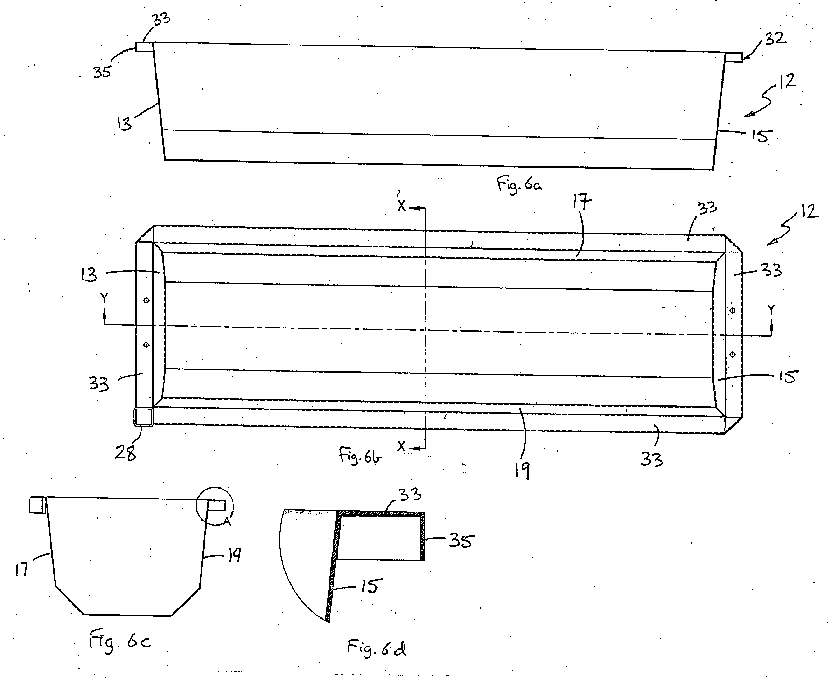

Figures 6a to 6d illustrate, respectively, a preferred trough suitable for use as part of the trough assembly of Figure 1 in side sectional view, plan view, end sectional view and detailed end sectional view.

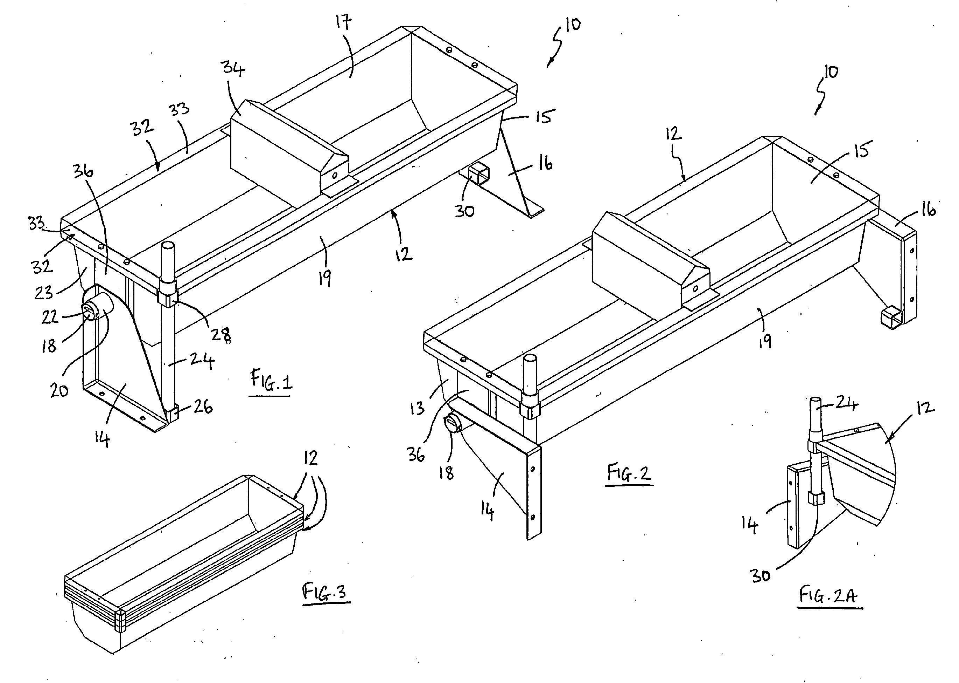

Referring now to Figure 1 of the drawings, there is shown generally indicated as 10, a drinking trough assembly embodying the invention. The drinking trough assembly 10 comprises a trough 12 mounted between two support brackets or stands 14, 16. To this end, a respective shaft or bar 18 (only one visible) is provided at each end 13, 15 of the trough 12, projecting laterally from the respective end 13, 15.

The stands 14, 16 include a respective bush or sleeve 20 for receiving the respective shaft 18. Once inserted into the sleeve 20, the shaft 18 may be secured by, for example, a pin 22 or other suitable fixing means. The preferred arrangement is such that each shaft 18 is able to pivot upward along its longitudinal axis with respect to the respective sleeve 20. Typically, the shafts 18 are substantially horizontally disposed in use so that the trough may pivot about a substantially horizontal axis.

Figure 1 shows the trough assembly 10 in a first mode of use in which the stands 14, 16, engage with a ground surface (not shown), the trough 12 being supported above the ground surface by the stands 14, 16. During use, the trough 12 may be fixed in position with respect to stands 14,16 by means of a rod 24 or other rigid member extending between the trough 12 and at least one of the stands 14, 16. To this end, at least one of the stands 14 is provided with a socket 26 for receiving the rod 24, the trough 12 carrying a second socket 28 for receiving another portion of the rod 24.

Figure 2 shows a trough assembly 10 in a second mode of use in which the mode of orientation between the trough 12 and the stands 14, 16 is displaced by approximately 90° with respect to the orientation shown in Figure 1. In this mode of use, the stands 14, 16 may be fixed on, for example, a wall surface or other substantially vertical surface. As before, the rod 24 may be used to fix the orientation of the trough 12 with respect to the stands 14, 16, sockets 28, 30 being provided for receiving the rod 24.

A housing 34 for a ball cock (not shown) may also be provided in the trough 12.

For ease of transport and storage, the stands 14, 16 are removable from the shafts 18. In order to allow the troughs 12 to be stacked one within another during transport and storage, it is advantageous that the shafts 18 can also be removed from the troughs 12. Also, to further facilitate stacking of the troughs 12, the ends 13, 15 and sides 17, 18 of the trough 12 are tapered. For example, the ends 13, 15 and sides 17, 18 of the trough 12 are obliquely disposed with respect to the plane in which the mouth of the trough 12 lies.
Figure 3 shows, by way of example, the three troughs 12, being stacked one within another.

The tapering of the ends 13, 15 and the trough 12 presents a problem when locating the respective shafts 18 at each end 13, 15, since each shaft 18 would be required to project obliquely from the tapered end if it is to provide a substantially horizontal pivoting axis during use. Moreover, it is undesirable to puncture either ends 13, 15 of the trough 12 with a screw, or other fixing, in order to fix the shafts 18 in place since this can promote leaks in the ends of the trough 12.

Accordingly, each shaft 18, is removably coupled to the respective ends 13, 15 of the trough 12 by means of a respective coupling device in the preferred form of support bracket 36 (only one visible), each support bracket 36 being releasably fixable to the trough 12 at a location adjacent to mouth of the trough 12. To this end, it is preferred that the trough 12 includes a flange or lip 32 at least at each end 13, 15. The lip 32 is, in a preferred embodiment, integrally formed with the trough 12 and may, for example, be formed by folding a portion of the material, typically metal or plastics, used to make the trough 12.

The lip 32 includes a lateral portion 33 which preferably is disposed in a plane which is substantially coincident with, or substantially parallel with, the plane in which the mouth of the trough 12 lies. In a preferred embodiment, the lip 32 extends substantially around the entire mouth of the trough 12.

In a preferred embodiment, the bracket 36 comprises a plate 38 from which the shaft 18 8 projects. The shaft 18 is preferably fixed to the plate 38 by any suitable means, e.g. welding. Preferably, the shaft 18 projects substantially perpendicularly from the plate 38. A flange 40 is provided at one end of the plate 38. The flange 40, in a preferred embodiment, projects substantially perpendicularly from the plate 38. The flange 40 may, as illustrated, extend along one or both sides of the plate 38 to lend strength to the plate 38.
The bracket 36 is connectable to the trough 12 by releasable fixing means. In the illustrated embodiment, the fixing means take the form of one or more screws 42, or other fixings. It will be understood however, that any other releasable fixing means may be employed. For example, the bracket 36 may be, for example, releasably mountable to the trough 12 by means of a clip mechanism (not illustrated), or a friction fit mechanism (not illustrated).

In the illustrated embodiment, the bracket 36 is connectable to the lip 32 at the respective ends 13, 15 of the trough 12. It is advantageous to form the screw-receiving apertures 44 in the lip 32 rather than the body of the trough 12 itself. Corresponding screw-receiving apertures 44 are also formed in the flange 40 of the bracket 36 and so, when the bracket 36 is engaged with the lip 32, the flange 40 engages with the in use underside of the lip 32.

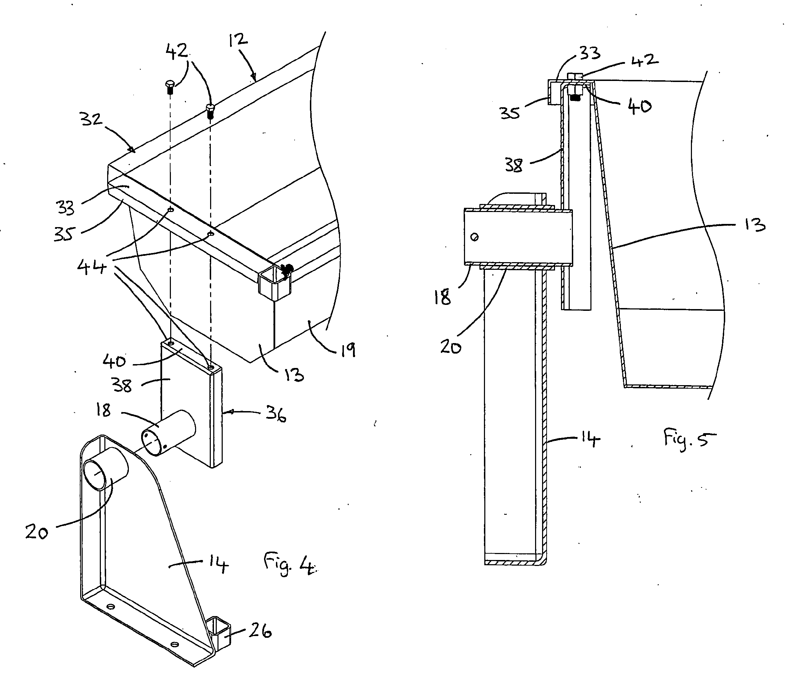

In the preferred arrangement, when the bracket 36 is fitted to the trough 12, the plates 38 extend substantially perpendicularly with respect to the mouth of the trough and the shaft 18 is therefore disposed in the plane which is substantially parallel with the plane of the mouth of the trough. In the illustrated embodiment this can best be understood from Figure 5 which shows that the bracket 36 is in effect suspended from the lip 32 and is spaced apart from the end 13 of the trough 12. Optionally, the lip 32 is provided with a down turned portion 35. In an alternative arrangement, the bracket 36 may be fixed to the lip 32 such that the flange 40 engages with the underside of the lip 32, while the plate 38 engages with the down turned portion 35. This improves the stability of the connection between the bracket 36 and the trough 12.

Once the respective brackets 36 are fitted to each end 13, 15 of the trough 12 in the manner described above, the respective supports stands 14, 16 can be fitted to the respective shafts 18 and the trough assembly 10 is ready for use.

Where it is desired to transport or store the trough assembly, the support stands 14, 16 and the brackets 36 are removed, and this, in conjunction with the tapered ends and sides of the trough 12 allow the troughs 12 to be stacked one inside another as illustrated in Figure 3. Moreover, should a shaft 18 become worn, rusted or otherwise impaired, it can readily be replaced without having to replace the entire trough 12.

The invention is not limited to the embodiment(s) described herein but can be amended or modified or varied without departing from the scope of the present invention.

## Claims

1. A drinking trough assembly (10) comprising a trough (12), and at least one coupling device (36) for coupling the trough (12) to a support (14,16), **characterised in that** said at least one coupling device (36) is removably connectable to the trough (12).

2. A drinking trough assembly (10) as claimed in claim 1, wherein said at least one coupling device (36) is removably connectable to the trough (12) adjacent the mouth of the trough (12).

3. A drinking trough assembly (10) as claimed in claim 2, wherein said at least one coupling device (36) is removably connectable to a lip (32) located at or adjacent the mouth of the trough (12).

4. A drinking trough assembly (10) as claimed in any preceding claim, wherein said at least one coupling device (36) is connectable to an end (13,15) or side (17,19) of the trough (12) which is tapered, or obliquely disposed, with respect to the mouth of the trough, said at least one coupling device (36) being suspended in use from said lip (32) or mouth to define a gap between said at least one coupling device (36) and said tapered end or side.

5. A drinking trough assembly (10) as claimed in claim any preceding claim, wherein said at least one coupling device (36) has a body, in the form of a plate, which is substantially perpendicularly disposed to the mouth of the trough.

6. A drinking trough assembly (10) as claimed in claim any preceding claim, wherein said at least one coupling device (36) includes a bar or shaft (18) for coupling with a support stand (14,16) or other support, the bar or shaft (18) projecting substantially perpendicularly from the body of the coupling device (36) to provide a pivot axis for the trough.

7. A drinking trough assembly (10) as claimed in any preceding claim, wherein the trough (12) is substantially rectangular in plan cross-section, with both ends (13,15) and both sides (17,19) being tapered to enable the trough (12) to be stacked in nesting relationship with other identical troughs.

8. A drinking trough assembly (10) as claimed in any preceding claim, wherein a respective coupling device (36) is provided at each end (13,15) of the trough (12).

9. A drinking trough assembly (10) comprising a trough (12) adapted to be stackable in nested relationship with one or more identical troughs, and a support structure being removably connectable to the drinking trough adjacent the mouth of the trough, whereby, when connected to the drinking trough, said support structure is adapted to support the drinking trough on a surface, said supporting structure being removable from the drinking trough to permit the trough to be stacked with one or more identical troughs.

10. A drinking trough assembly (10) as claimed in claim 9, wherein said support structure comprises a respective support member provided at each end of the trough, each support member comprising a coupling device (36) attachable to the trough in the form of a plate extending substantially perpendicularly to the mouth of the trough , and a stand member (14,16) pivotally attached to be the respective coupling member (36) for movement between a first position, wherein the stand member extends substantially perpendicular to said mouth of the trough for mounting the trough on a horizontal surface, and a second position, wherein the stand member extends substantially parallel to the sides of the trough for mounting the trough on a vertical surface.

11. A drinking trough assembly (10) as claimed in claim 10, wherein each support member is provided with a linking member having a first end connectable to the trough and a second end connectable to the respective stand member for retaining the stand member in its first and second positions.

12. A drinking trough assembly (10) as claimed in claim 11, wherein each linking member comprises a rod (24) receivable in a socket (28) provided on a respective corner of the trough and a selected one of a first and second socket (26,30) provided on the respective stand member, said first and second sockets (26,30) extending perpendicular to one another such that the rod (24) is receivable in the first socket (26) when the respective stand member (14,16) is in its first position and in the second socket (30) when the respective stand member is in its second position.
